(19) Europäisches Patentamt
European Patent Office
Office européen des brevets

(11) **EP 3 461 588 B1**

(12) **EUROPÄISCHE PATENTSCHRIFT**

(45) Veröffentlichungstag und Bekanntmachung des Hinweises auf die Patenterteilung:
**12.05.2021  Patentblatt 2021/19**

(21) Anmeldenummer: **18194315.0**

(22) Anmeldetag: **13.09.2018**

(51) Int Cl.:
**B25B 21/00** *(2006.01)*     **B25B 23/147** *(2006.01)*
**G01L 25/00** *(2006.01)*

(54) **KALIBRIERVERFAHREN FÜR EINEN KRAFTSCHRAUBER**

CALIBRATION METHOD FOR POWER TOOL

PROCÉDÉ D'ÉTALONNAGE POUR UNE VISSEUSE MÉCANIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.09.2017   DE 102017008859**

(43) Veröffentlichungstag der Anmeldung:
**03.04.2019   Patentblatt 2019/14**

(73) Patentinhaber: **alki Technik GmbH Schraubsysteme Entwicklung-Produktion-Vertrieb 85051 Ingolstadt (DE)**

(72) Erfinder: **Kipfelsberger, Alexander 85051 Ingolstadt (DE)**

(74) Vertreter: **Liebl, Thomas Neubauer - Liebl - Bierschneider - Massinger Münchener Straße 49 85051 Ingolstadt (DE)**

(56) Entgegenhaltungen:
**WO-A1-2012/019575     DE-A1- 19 845 871 DE-A1- 19 907 713**

**Beschreibung**

Die Erfindung betrifft ein Kalibierverfahren für einen Kraftschrauber als Schwerlastschrauber nach dem Oberbegriff des Anspruchs 1.

Kraftschrauber als Schwerlastschrauber werden zum Anziehen und Lösen von großen, stabilen Verschraubungen beispielsweise im Maschinenbau, bei Windkraftanlagen, etc. eingesetzt. Kraftschrauber sind mit unterschiedlichen, steuerbaren Antriebsmotoren, insbesondere als Elektroschrauber, Hydraulikschrauber oder Pneumatikschrauber mit unterschiedlichen Leistungsbereichen allgemein bekannt. Schwere Verschraubungen sind regelmäßig kritische Verbindungen, für die konstruktionsbedingt bestimmte Anzugsdrehmomente vorgegeben sind, die möglichst genau einzuhalten sind und deren Einhaltung regelmäßig auch durch eine Datenausgabe am Kraftschrauber dokumentiert wird.

Unterschiedliche Ausführungsformen von Kraftschraubern mit unterschiedlichen Maßnahmen zur Aufbringung eines bestimmten vorgegebenen Anzugsdrehmoments sind beispielsweise aus folgenden Dokumenten bekannt: DE 43 07 131 C2; EP 1 543 925 B1; DE 9010464 U1; DE 20319 668 U1.

Weiter sind aus der DE 198 45 871 A1 ein Verfahren und eine Vorrichtung zum Anziehen von Schrauben bekannt, wobei ein Anzugsmoment und ein Drehwinkel ermittelt werden und aus einem daraus gebildeten Gradienten eine Abschaltbedingung abgeleitet wird.

Zudem ist aus der DE 199 07 713 A1 eine Kalibrierbox zur Kalibrierung von Steuerkarten von Elektroschraubern bekannt zur Ermittlung von Signalabweichungen zwischen Eingangs- und Referenzsignalen.

Weiter ist aus der WO 2012/019575 A1 eine Vorrichtung zur Erzeugung eines Anzugsmoments für Schraubverbindungen bekannt als Kombination eines Drehmomentvervielfältigers und eines kalibrierten Drehmomentschlüssels.

Ein Kraftschrauber weist einen steuerbaren Antriebsmotor und ein diesem nachgeschaltetes Untersetzungsgetriebe auf, wobei der Arbeitsbereich des Kraftschraubers für vorgebbare Anzugsdrehmomente durch eine vorgegebene Motorleistung und eine vorgegebene Getriebeuntersetzung vorbestimmt ist.

Eine Motorsteuereinheit für den Antriebsmotor weist eine Eingabeeinheit zur externen Vorgabe eines bestimmten Anzugsdrehmoments als Eingabe-Solldrehmoment ($M_{soll,ext}$) auf, mit dem eine Verschraubung angezogen werden soll.

Aufgrund von Bauteiltoleranzen, insbesondere von Getriebetoleranzen und/oder Verschleißeffekten und/oder Umwelteinflüssen, entspricht dem an der Eingabeeinheit vorgegebenen Eingabe-Solldrehmoment ($M_{soll,ext}$) nicht mit der erforderlichen Genauigkeit ein entsprechender Drehmoment-Istwert ($M_{ist,mess}$) als Ist-Anzugsdrehmoment an der Getriebe-Abtriebswelle. Um die geforderte Genauigkeit der Drehmoment-Istwerte bei einer Verschraubung zu gewährleisten, ist vom Hersteller vor Auslieferung eine Kalibrierung jedes Kraftschraubers erforderlich.

Dazu wird der Kraftschrauber für den Kalibriervorgang mit der Getriebe-Abtriebswelle mit einer Messwelle einer genau kalibrierten Drehmoment-Messeinrichtung verbunden. Von einer Bedienperson oder gegebenenfalls automatisiert werden für einen Kalibriervorgang unterschiedliche, beabstandete Eingabe-Solldrehmomente ($M_{soll,ext}$) vorgegeben und die zugehörigen, gemessenen Drehmoment-Istwerte ($M_{ist,gemessen}$) als sogenannte Stützstellen erfasst und in einem Messprotokoll abgelegt. Die tatsächlich bei einem Schraubprozess erforderlichen genauen, tatsächlich aufzubringenden Drehmoment-Istwerte, entsprechend den Messdaten ($M_{ist,gemessen}$) können dann anhand der ermittelten Stützstellen und von Interpolierungen zwischen den Stützstellen aus dem Messprotokoll entnommen werden und mit einer entsprechenden Korrektur als Eingabe-Solldrehmomente eingegeben werden. Beispielsweise ist dann für einen geforderten Drehmoment-Istwert von 300 Nm ein bezifferter, korrigierter Wert eines Eingabe-Solldrehmoments entsprechend einem zugeordneten, gemessenen Drehmoment-Istwert von 350 Nm von einer Bedienperson aus dem Messprotokoll zu ermitteln und an der Eingabeeinheit einzugeben. Ersichtlich sind diese Maßnahmen auch in Verbindung mit einer Dokumentation aufwendig.

Aufgabe der Erfindung ist es, ein vereinfachtes, vorzugsweise automatisiertes Kalibrierverfahren vorzuschlagen, bei dem zudem das Ergebnis der Kalibrierung im Funktionsbetrieb des Kraftschraubers vereinfacht berücksichtigt und angepasst wird.

Diese Aufgabe wird mit den Merkmalen des Anspruchs 1 gelöst.

Gemäß Anspruch 1 ist eine elektronische Kalibriereinheit mittels Datenleitungen sowohl mit der Drehmoment-Messeinrichtung als auch mit der Motorsteuereinheit des Kraftschraubers verbunden. Die Kalibriereinheit weist zudem eine Programmier- und Anzeigeeinheit vorzugsweise als "Touchscreen" auf.

Die Motorsteuereinheit ist so ausgelegt, dass zu vorbestimmten Eingabe-Solldrehmomenten ($M_{soll,ext}$), welche extern von Hand und/oder mittels Eingabedaten elektronisch vorgebbar sind, jeweils zugeordnete, korrigierte, interne Steuer-Sollwerte ($M_{soll,korr}$) speicherbar sind. Den extern eingebbaren Eingabe-Solldrehmomenten ($M_{soll,ext}$) ist mit anderen Worten somit in einer zweiten Ebene entsprechend einer Messkurve oder eines Kennfelds jeweils ein interner Steuer-Sollwert ($M_{soll,korr}$) zugeordnet. Ein Eingabe-Solldrehmoment ($M_{soll,ext}$) ist somit über eine solche Zuordnung mit einem internen Steuer-Sollwert ($M_{soll,korr}$) gekoppelt, wobei der Antriebsmotor des Kraftschraubers (nach einer Kalibrierung) im betriebsmäßigen Einsatz jeweils durch einen zugeordneten korrigierten, internen Steuer-Sollwert ($M_{soll,korr}$) gesteuert wird.

Zur Vorbereitung eines Kalibriervorgangs werden an der Programmier- und Anzeigeeinheit Kraftschrauber-Daten, insbesondere dessen Arbeitsbereich in Verbindung mit Getriebedaten eingegeben. Weiter werden eine Anzahl von Hand vorgebbarer, vorzugsweise automatisch aufeinanderfolgender Kalibriermessungen mit im Arbeitsbereich beabstandeten Anzugsdrehmomenten als Eingabe-Solldrehmomente ($M_{soll,ext}$) eingegeben.

Während der Kalibriermessungen werden in der Motorsteuereinheit die Eingabe-Solldrehmomente ($M_{soll,ext}$) direkt und unmittelbar als noch nicht korrigierte Steuer-Sollwerte ($M_{soll,korr}$) verwendet.

Nach dem Start eines Kalibriervorgangs werden die vorgegebenen Kalibriermessungen nacheinander, vorzugsweise automatisch durchgeführt. Dabei wird für jedes ausgewählte Eingabe-Solldrehmoment ($M_{soll,ext}$) mit der Drehmoment-Messeinrichtung ein zugeordnetes Drehmoment als Anzugsdrehmoment ($M_{ist,gemessen}$) gemessen. Aus dergestalt ermittelten Wertepaaren werden jeweils Stützstellen in der Kalibriereinheit gebildet und gespeichert.

Nach den durchgeführten Kalibriermessungen wird in der Kalibriereinheit durch die ermittelten Stützstellen eine für Zwischenwerte interpolierte, kontinuierlich verlaufende Messkurve oder ein entsprechendes Kennfeld gebildet, so dass auch für Zwischenwerte eine eindeutige Zuordnung zwischen einem Eingabe-Solldrehmoment ($M_{soll,ext}$) und einem Ist-Anzugsdrehmoment ($M_{ist,gemessen}$) liegt.

Mittels der Kalibriereinheit wird dann die Messkurve oder gegebenenfalls ein entsprechendes Kennfeld der Motorsteuereinheit übermittelt und dort gespeichert.

Zum Abschluss des Kalibriervorgangs wird die Motorsteuereinheit so geschaltet, dass für den weiteren betriebsmäßigen Einsatz des Kraftschraubers die beim Kalibriervorgang zugeordneten gemessenen Ist-Anzugsdrehmomente ($M_{ist,gemessen}$) und die eingegebenen Eingabe-Solldrehmomente ($M_{soll,ext}$) vertauscht werden dergestalt, dass die gemessenen Ist-Anzugsdrehmomente ($M_{ist,gemessen}$) aus der Messkurve eines Kennfelds als eingebbare Eingabe-Solldrehmomente ($M_{soll,ext}$) verwendet werden und die ursprünglichen zur Kalibrierung verwendeten Eingabe-Solldrehmomente ($M_{soll,ext}$) als zugeordnete korrigierte Steuer-Sollwerte ($M_{soll,korr}$) verwendet werden.

Damit wird erreicht, dass das Ergebnis der Kalibrierung in der Motorsteuereinheit integriert ist, so dass insbesondere für eine Bedienperson ein genauer bezifferter Eingabe-Sollwert als Eingabe-Solldrehmoment ($M_{soll,ext}$) vorgebbar ist und die Motorsteuereinheit selbsttätig dazu einen internen, korrigierten Steuer-Sollwert ($M_{soll,korr}$) ermittelt, mit dem dann entsprechend dem Kalibrierergebnis der Kraftschrauber zur Erreichung des genauen entsprechenden Ist-Drehmoments an der Getriebeabtriebswelle gesteuert wird. Damit wird vorteilhaft sowohl die Genauigkeit eines Anzugsdrehmoments erhöht als auch die Handhabung des Kraftschraubers wesentlich vereinfacht, da eine Bedienperson keine Korrekturen berechnen und eingeben muss, sondern dies im Kraftschrauber intern automatisch durchgeführt wird.

Die Funktionsgenauigkeit des Kraftschraubers hängt ersichtlich sowohl von der Anzahl der verwendeten Stützstellen als auch von der Interpolation des Messkurvenverlaufs zwischen den Stützstellen ab. Für übliche Einsatzfälle hat sich gezeigt, dass für geforderte Funktionsgenauigkeiten eine Kalibrierung mit sieben Stützstellen ausreichend ist, wenn der Verlauf der Messkurve zwischen den Stützstellen mit einem Polynom n-ter Ordnung nachgebildet wird, wobei ein Polynom 3. Ordnung für übliche Genauigkeitsanforderungen ausreichend ist. Die ermittelten Koeffizienten des Polynoms können gegebenenfalls der Motorsteuereinheit übermittelt und dort abgelegt werden.

Antriebsmotoren des Kraftschraubers, vorzugsweise Elektromotoren, können zusammen mit den Motorsteuereinheiten von geeigneten Herstellern für übliche Genauigkeitsanforderungen toleranzfrei geliefert und eingesetzt werden. Für den Kalibriervorgang ist es zweckmäßig, die Eingabe-Solldrehmomente ($M_{soll,ext}$) mit einem angenommenen, theoretischen Wirkungsgrad des Untersetzungsgetriebes von 100% zu bilden, wobei beim Kalibriervorgang jeweils kleinere zugeordnete Ist-Anzugsdrehmomente ($M_{ist,gemessen}$) ermittelt werden, da der tatsächliche, toleranzbehaftete Getriebewirkungsgrad kleiner 100% ist. Da bei der Kalibrierung im Wesentlichen der Unterschied zwischen dem theoretischen 100%-Wirkungsgrad und dem tatsächlichen kleineren Wirkungsgrad ermittelt wird, liegen vorteilhaft die für die Kalibrierung verwendeten Eingabe-Solldrehmomente ($M_{soll,ext}$) und die gemessenen zugeordneten Ist-Anzugsdrehmomente ($M_{ist,gemessen}$) nicht allzu weit auseinander, so dass entsprechend auch die nach der Kalibrierung erforderliche interne Sollwertekorrektur vorteilhaft relativ gering und damit beherrschbar ist.

Besonders vorteilhaft sind das vorstehende Kalibrierverfahren und die daraus abgeleiteten Maßnahmen bei Kraftschrauber-Serien einsetzbar. Dazu wird vorgeschlagen, für Kraftschrauber unterschiedlicher Serien mit unterschiedlichen Arbeitsbereichen jeweils gleiche Antriebsmotoren, vorzugsweise gleiche Elektromotoren und/oder gleiche Motorsteuereinheiten, zu verwenden, wobei dann die Serienunterschiede im Wesentlichen durch unterschiedliche Untersetzungsgetriebe mit unterschiedlichen GetriebeUntersetzungen gegeben sind. Die Kalibrierungen der einzelnen Kraftschrauber können vorteilhaft mit der gleichen Drehmoment-Messeinrichtung und gleichen Kalibriereinheit erfolgen, wobei zur Bestimmung der jeweils relevanten Eingabe-Solldrehmomente ($M_{soll,ext}$) dann einfach nur für den Kalibriervorgang die jeweiligen unterschiedlichen Getriebeuntersetzungen an der Programmier- und Anzeigeeinheit einzugeben sind.

Bei der Serienverwendung von jeweils toleranzfreien, gleichen Elektromotoren als Antriebsmotoren betrifft die Kalibrierung nur jeweils ein aktuelles Getriebe. Besonders geeignet sind dazu bürstenlose Elektro-Motoren. Solche Elektro-Motoren als Verschleiß-Bauteile können dann ausgetauscht werden, ohne dass eine neue Kalibrierung erforderlich ist, da die Kalibrierung im Wesentlichen das Untersetzungsgetriebe betrifft und auch beim Motoraustausch erhalten bleibt. Vorteilhaft kann damit ein Motoraustausch einfach am Einsatzort bei einem Anwender eines Kraftschraubers durchgeführt werden, ohne dass der Kraftschrauber zurück zu einem Kraftschrauber-Hersteller für eine Nach-Kalibrierung mit erheblichem Aufwand zurückgeliefert werden muss.

Anhand einer Zeichnung wird die Erfindung beispielhaft weiter erläutert.

Es zeigen:

Figur 1 eine schematische Darstellung eines Kalibrieraufbaus zu einem Kalibrierverfahren für einen Kraftschrauber, und

Figur 2 ein Diagramm zu einem Kalibrierergebnis.

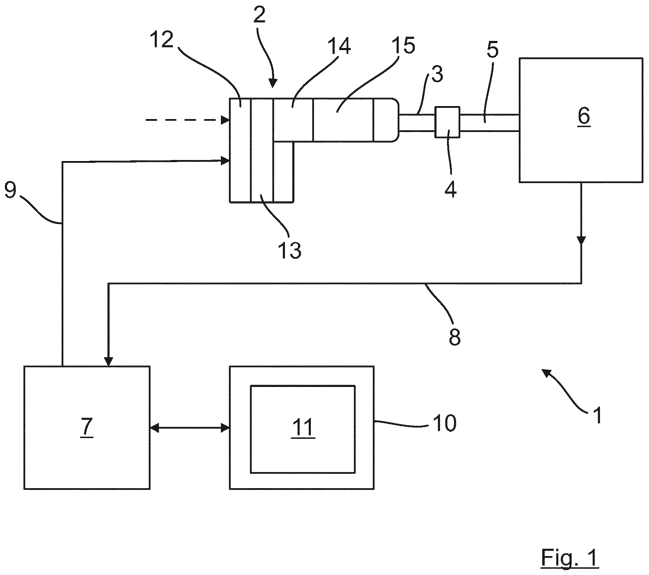

In Figur 1 ist schematisch ein Kalibrieraufbau 1 gezeigt, bei dem ein Kraftschrauber 2 mit einer Getriebeabtriebswelle 3 mittels einer Kopplung 4 mit einer Messwelle 5 einer Drehmoment-Messeinrichtung 6 verbunden ist. Eine elektronische Kalibriereinheit 7 ist mittels einer Datenleitung 8 mit der Drehmoment-Messeinrichtung 6 und mit einer Datenleitung 9 mit einer Motorsteuereinheit 13 des Kraftschraubers 2 verbunden. Die Kalibriereinheit 7 weist zudem eine Programmier- und Anzeigeeinheit 10 mit einem Touchscreen 11 auf.

Im Kraftschrauber 2 sind (schematisch dargestellt) eine Eingabeeinheit 12, eine Motorsteuereinheit 13, ein bürstenloser Elektromotor 14 und ein Getriebe 15 angeordnet. Die Eingabeeinheit 12 und die Motorsteuereinheit 13 können von der Kalibriereinheit 7 über die Datenleitung 9 oder gegebenenfalls von extern durch eine Bedienperson (dargestellt durch Pfeil 16) angesteuert werden.

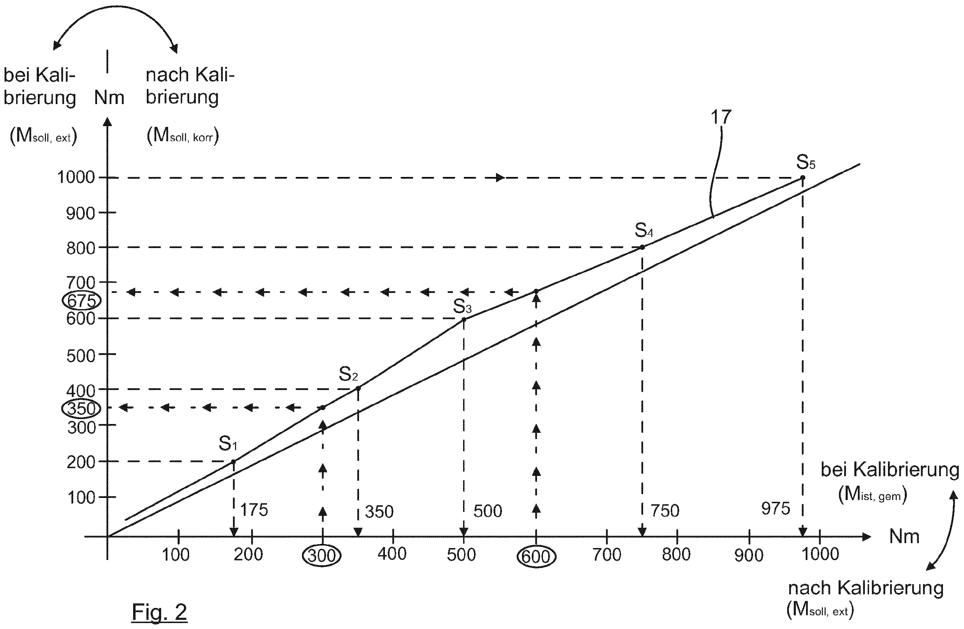

Für eine Kalibrierung werden in der Praxis sieben Stützstellen verwendet. Nach Figur 2 werden hier beispielhaft jedoch nur fünf Stützstellen S1 bis S5 verwendet, um die Übersichtlichkeit zu verbessern. Entsprechend der Eintragungen auf der vertikalen Ordinaten wurden als nacheinander angefahrene Eingabe-Solldrehmomente ($M_{soll,ext}$) bei der Kalibrierung 200 Nm, 400 Nm, 600 Nm, 800 Nm und 1000 Nm vorbestimmt. Bei einem (theoretischen) Getriebewirkungsgrad von 100% wäre dann der jeweils gleiche Wert als Messwert von der Drehmoment-Messeinrichtung 6 ermittelt worden. Tatsächlich ist der Getriebewirkungsgrad jedoch kleiner und der während der Kalibrierung gemessene Drehmoment-Istwert ($M_{ist,gemessen}$) jeweils entsprechend kleiner, so dass sich die eingetragenen gemessenen Drehmoment-Istwerte ($M_{ist,mess}$) der Reihe nach zugeordnet mit 175 Nm, 350 Nm, 500 Nm, 750 Nm und 975 Nm ergeben. Aus den jeweiligen Wertepaaren ergeben sich dann die eingetragenen Stützstellen S1 bis S5. Durch eine Polynom-Interpolation ergibt sich die Messkurve 17, mit der dann die Zwischenwerte zwischen den Stützstellen S1 bis S5 bestimmt sind.

Das Diagramm nach Figur 2 zeigt, dass die für die Kalibrierung verwendeten Eingabe-Solldrehmomente ($M_{soll,ext}$) entsprechend dem oberen linken Eintrag neben der Ordinate tatsächlich kleinere Drehmomentwerte ($M_{ist,gemessen}$) (entsprechend dem Eintrag rechts oberhalb der Abszisse) ergeben. Nach der Kalibrierung sollen die Eingabe-Einheit 12 und die Motorsteuerung 13 so geschaltet werden, dass Abszissenwerte und Ordinatenwerte getauscht werden, sodass die Abszissenwerte (hier als lineare Skala) als neue Eingabe-Solldrehmomente ($M_{soll,ext}$) (entsprechend dem Eintrag rechts unterhalb der Abszisse) verwendet werden. Die mittels der Messkurve 17 zugeordneten Ordinantenwerte sollen nach der Kalibrierung als interne Steuer-Sollwerte ($M_{soll,korr}$) verwendet werden, mit denen intern korrigiert die Kraftschraubersteuerung erfolgt. Beispielsweise entspricht hier nach der Kalibrierung ein extern betriebsmäßig eingegebenes Eingabe-Solldrehmoment von 300 Nm entsprechend dem eingekreisten Wert an der Abszisse ein korrigierter Steuer-Sollwert ($M_{soll,korr}$) von 350 Nm entsprechend dem eingekreisten Ordinatenwert. Das heißt mit dem intern abgespeicherten und verwendeten korrigierten Sollwert als Steuersollwert von 350 Nm wird tatsächlich und genau ein gewünschtes Anzugsdrehmoment von 300 Nm erreicht, wie es von einer Bedienperson eingegeben wird. Ein entsprechend weiteres Beispiel ist mit einem Eingabe-Solldrehmoment von 600 Nm (Abszisse) und einem zugeordneten korrigierten Steuer-Sollwert ($M_{soll,korr}$) von 675 Nm (Ordinate) eingezeichnet.

## Patentansprüche

1. Kalibrierverfahren für einen Kraftschrauber als Schwerlastschrauber, mit einem steuerbaren Antriebsmotor (14) und einem nachgeschalteten Untersetzungsgetriebe (15), dessen Arbeitsbereich für vorgebbare Anzugsdrehmomente durch eine vorgegebene Motorleistung und durch eine vorgegebene Getriebeuntersetzung vorbestimmt ist, wobei eine Motorsteuereinheit (13) eine Eingabeeinheit (12) zur externen Vorgabe eines bestimmten Anzugsdrehmoments als Eingabe-Solldrehmoment ($M_{soll,ext}$) aufweist, und wobei der Kraftschrauber (2) für den Kalibriervorgang mit der Getriebeabtriebswelle (3) mit einer Messwelle (5) einer genau kalibrierten Drehmoment-Messeinrichtung (6) verbunden ist, welche die Messdaten als Drehmoment-istwerte ($M_{ist,mess}$) erfasst,

   **dadurch gekennzeichnet,**

   **dass** eine elektronische Kalibriereinheit (7) mit Datenleitungen (8, 9) mit der Drehmoment-Messeinrichtung (6) und der Motorsteuereinheit (13) verbunden ist, und eine betätigbare Programmier- und Anzeigeeinheit (10) aufweist,

**dass** in der Motorsteuereinheit (13) zu vorbestimmten Eingabe-Solldrehmomenten ($M_{soll,ext}$) jeweils zugeordnete korrigierte, interne Steuer-Sollwerte ($M_{soll,korr}$) speicherbar sind, mit denen nach der Kalibrierung im betriebsmäßigen Einsatz der Kraftschrauber (2) intern gesteuert wird,

**dass** zur Vorbereitung eines Kalibriervorgangs an der Programmier- und Anzeigeeinheit (10) Kraftschrauber-Daten eingegeben werden, zudem werden weiter eine Anzahl von Hand vorgebbarer mit im Arbeitsbereich beabstandeten Anzugsdrehmomenten als Eingabe-Solldrehmomente ($M_{soll,ext}$) vorbestimmt und eingegeben,

**dass** während der Kalibriermessungen in der Motorsteuereinheit (13) die Eingabe-Solldrehmomente ($M_{soll,ext}$) als noch nicht korrigierte Steuer-Sollwerte ($M_{soll-korr}$) verwendet werden,

**dass** nach dem Start eines Kalibriervorgangs die vorgegebenen Kalibriermessungen nacheinander durchgeführt werden, wobei für jedes Eingabe-Solldrehmoment ($M_{soll,ext}$) mit der Drehmoment-Messeinrichtung (6) ein zugeordnetes Drehmoment als Ist-Anzugsdrehmoment ($M_{ist,gemessen}$) gemessen wird und dass aus dergestalt ermittelten Wertepaaren jeweils Stützstellen ($S_1$-$S_5$) in der Kalibriereinheit (7) gebildet und gespeichert werden,

**dass** nach den Kalibriermessungen in der Kalibriereinheit (7) durch die ermittelten Stützstellen ($S_1$-$S_5$) eine für Zwischenwerte interpolierte, kontinuierlich verlaufende Messkurve (17) oder ein entsprechendes Kennfeld gebildet wird, so dass auch für Zwischenwerte eine eindeutige Zuordnung zwischen einem Eingabe-Solldrehmoment ($M_{soll,ext}$) und einem Ist-Anzugsdrehmoment ($M_{ist,gemessen}$) vorliegt,

**dass** mittels der Kalibriereinheit (7) die Messkurve (17) oder ein entsprechendes Kennfeld der Motorsteuereinheit (13) übermittelt und dort gespeichert wird, und interne, korrigierte Steuer-Sollwerte ($M_{soll,korr}$) aus der Messkurve vorliegen, die im Betrieb nach der Kalibrierung zur Motorsteuerung verwendet werden können,

**dass** zum Abschluss des Kalibriervorgangs die Motorsteuereinheit so geschaltet wird, dass für den weiteren betriebsmäßigen Einsatz des Kraftschraubers die gemessenen Ist-Anzugsdrehmomente ($M_{ist,gemessen}$) aus der Messkurve oder aus einem Kennfeld als neue, eingebbare Eingabe-Solldrehmomente ($M_{soll,ext}$) verwendet werden und die ursprünglichen vor und zur Kalibrierung verwendeten Eingabe-Solldrehmomente ($M_{soll,ext}$) als zugeordnete korrigierte Steuer-Sollwerte ($M_{soll,korr}$) verwendet werden.

2. Kalibrierverfahren nach Anspruch 1, **dadurch gekennzeichnet, dass** der Verlauf der Messkurve zwischen den Stützstellen (S) mit einem Polynom n-ter Ordnung nachgebildet und interpoliert wird, vorzugsweise als Polynom 3. Ordnung mit:

$$M_{ist,gem} = a_3 \cdot M^3_{soll,ext} + a_2 \cdot M^2_{soll,ext} + a_1 \cdot M_{soll,ext},$$

Und die ermittelten Koeffizienten $a_1$ - $a_n$ als Parameter für den Messkurvenverlauf übermittelt und abgelegt werden.

3. Kalibrierverfahren nach Anspruch 1 oder Anspruch 2, **dadurch gekennzeichnet, dass** bei einer Kalibrierung sieben Stützstellen (S) ermittelt werden.

4. Kalibrierverfahren nach einem der Ansprüche 1 bis 3, **dadurch gekennzeichnet, dass** die Motorleistung des Antriebsmotors (14), vorzugsweise eines Elektromotors, mit der Motorsteuereinheit (13) toleranzfrei steuerbar ist und die Eingabe-Solldrehmomente ($M_{soll,ext}$) für den Kalibriervorgang mit einem angenommen, theoretischen Wirkungsgrad des Untersetzungsgetriebes (15) von 100% vorgegeben werden, so dass beim Kalibriervorgang jeweils kleinere zugeordnete Ist-Anzugsdrehmomente ($M_{ist,gemessen}$) ermittelt werden, wobei die ermittelte Differenz durch den tatsächlichen, toleranzbehafteten Getriebe-Wirkungsgrad von kleiner 100% bestimmt ist.

5. Kalibrierverfahren nach Anspruch 4, **dadurch gekennzeichnet,**
**dass** für Kraftschrauber (2) unterschiedlicher Serien mit unterschiedlichen Arbeitsbereichen jeweils gleiche Antriebsmotoren (14), vorzugsweise Elektro-Motoren, und gleiche Motorsteuereinheiten (13) jedoch Untersetzungsgetriebe mit unterschiedlichen Getriebeuntersetzungen verwendet werden,
**dass** die Kalibrierungen jeweils mit der gleichen Drehmoment-Messeinrichtung (6) und Kalibriereinheit (7) erfolgen, wobei zur Bestimmung der Eingabe-Solldrehmomente ($M_{soll,ext}$) für den Kalibriervorgang die jeweiligen unterschiedlichen Getriebeuntersetzungen an der Programmier- und Anzeigeeinheit (10) eingegeben werden.

6. Kalibrierverfahren nach Anspruch 4 oder Anspruch 5, **dadurch gekennzeichnet, dass** bei der Serienverwendung von toleranzfreien, gleichen Elektromotoren, vorzugsweise bürstenlose Elektromotoren, als Antriebsmotoren (14) die Kalibrierung nur jeweils ein aktuelles Untersetzungsgetriebe (15) betrifft, so dass Elektromotoren (14) als Verschleiß-Bauteile austauschbar sind, ohne dass eine neue Kalibrierung erforderlich ist.

**Claims**

1. Calibration method for a power screwdriver as heavy-duty screwdriver, having a controllable drive motor (14) and a downstream reduction gear (15), the working range of which is predetermined for predefinable tightening torques by a predefined motor output and by a predefined gear reduction, wherein a motor control unit (13) has an input unit (12) for the external specification of a particular tightening torque as setpoint input torque ($M_{soll,ext}$), and wherein, for the calibration operation, the power screwdriver (2) is connected by the gear output shaft (3) to a measuring shaft (5) of a precisely calibrated torque measuring device (6) which senses the measured data as actual torque values ($M_{ist,mess}$),
   **characterized**
   **in that** an electronic calibration unit (7) is connected by data lines (8, 9) to the torque measuring device (6) and the motor control unit (13) and has an actuable programming and display unit (10),
   **in that** corrected, internal setpoint control values ($M_{soll,korr}$) that are each assigned to predetermined setpoint input torques ($M_{soll,ext}$) are able to be stored in the motor control unit (13), said internal setpoint control values being used, after calibration, to internally control the power screwdriver (2) in operational use,
   **in that**, to prepare a calibration operation, power screwdriver data are input at the programming and display unit (10), and also a number of manually predefinable tightening torques that are spaced apart in the working range are predetermined and input as setpoint input torques ($M_{soll,ext}$),
   **in that**, during the calibration measurements, the setpoint input torques ($M_{soll,ext}$) are used as not yet corrected setpoint control values ($M_{soll,korr}$) in the motor control unit (13),
   **in that**, after the start of a calibration operation, the predefined calibration measurements are carried out in succession, wherein, for each setpoint input torque ($M_{soll,ext}$), an associated torque is measured as actual tightening torque ($M_{ist,gemessen}$) by the torque measuring device (6), and in that, from value pairs identified in this way, respective supporting points ($S_1$-$S_5$) are formed and stored in the calibration unit (7),
   **in that**, after the calibration measurements, a continuously extending measurement curve (17) interpolated for intermediate values or a corresponding characteristic map is formed by the identified supporting points ($S_1$-$S_5$) in the calibration unit (7), such that a clear assignment between a setpoint input torque ($M_{soll,ext}$) and an actual tightening torque ($M_{ist,gemessen}$) is present even for intermediate values,
   **in that**, by means of the calibration unit (7), the measurement curve (17) or a corresponding characteristic map of the motor control unit (13) is transmitted and stored there, and internal, corrected setpoint control values ($M_{soll,korr}$) from the measurement curve are present, which can be used for motor control during operation after the calibration,
   **in that**, at the end of the calibration operation, the motor control unit is switched such that, for the further operational use of the power screwdriver, the measured actual tightening torques ($M_{ist,gemessen}$) from the measurement curve or from a characteristic map are used as new setpoint input torques ($M_{soll,ext}$) that are able to be input and the setpoint input torques ($M_{soll,ext}$) used originally before and for the calibration are used as assigned corrected setpoint control values ($M_{soll,korr}$).

2. Calibration method according to Claim 1, **characterized in that** the profile of the measurement curve between the supporting points (S) is modelled and interpolated with an n-th order polynomial, preferably in the form of a 3rd order polynomial where:

$$M_{ist,gem} = a_3 \cdot M^3_{soll,ext} + a_2 \cdot M^2_{soll,ext} + a_1 \cdot M_{soll,ext},$$

   and the identified coefficients $a_1$ - $a_n$ are transmitted and stored as parameters for the measurement curve profile.

3. Calibration method according to Claim 1 or Claim 2, **characterized in that** seven supporting points (S) are identified during a calibration.

4. Calibration method according to one of Claims 1 to 3, **characterized in that** the motor output of the drive motor (14), preferably of an electric motor, is controllable in a tolerance-free manner by the motor control unit (13) and the setpoint input torques ($M_{soll,ext}$) are predefined for the calibration operation with an assumed, theoretical efficiency of the reduction gear (15) of 100%, such that, during the calibration operation, in each case smaller assigned actual tightening torques ($M_{ist,gemessen}$) are identified, wherein the identified difference is determined by the actual gear efficiency, subject to tolerances, of less than 100%.

5. Calibration method according to Claim 4, **characterized in that**, for power screwdrivers (2) of different series with different working ranges, in each case identical drive motors (14), preferably electric motors, and identical motor control units (13), but reduction gears with different gear reductions are used, **in that** the calibrations take place in each case with the same torque measuring device (6) and calibration unit (7), wherein, to determine the setpoint input torques ($M_{soll,ext}$) for the calibration operation, the respective different gear reductions are input at the programming and display unit (10).

**6.** Calibration method according to Claim 4 or Claim 5, **characterized in that**, in the series use of tolerance-free, identical electric motors, preferably brushless electric motors, as drive motors (14), the calibration concerns only in each case one current reduction gear (15), such that the electric motors (14) are interchangeable as wearing components without a new calibration being necessary.

**Revendications**

**1.** Procédé d'étalonnage pour une visseuse électrique servant de visseuse haute performance,
comprenant un moteur d'entraînement (14) pouvant être commandé et un réducteur à engrenages (15) placé en aval dont la plage de travail pour des couples de serrage prédéfinissables est prédéterminée par une puissance de moteur prédéfinie et par une démultiplication prédéfinie,
une unité de commande de moteur (13) présentant une unité d'entrée (12) pour la spécification externe d'un couple de serrage déterminé comme couple nominal d'entrée ($M_{soll,ext}$), et
la visseuse électrique (2) étant reliée pour le processus d'étalonnage avec l'arbre de sortie d'engrenage (3) à un arbre de mesure (5) d'un dispositif de mesure de couple (6) étalonné avec précision qui détecte les données de mesure sous la forme de valeurs réelles de couple (Mist,mess),
**caractérisé**
**en ce qu'**une unité d'étalonnage électronique (7) dotée de lignes de données (8, 9) est reliée au dispositif de mesure de couple (6) et à l'unité de commande de moteur (13), et présente une unité de programmation et d'affichage (10) pouvant être actionnée,
**en ce que** des valeurs nominales de commande internes ($M_{soll,korr}$), corrigées et associées respectivement à des couples nominaux d'entrée ($M_{soll,ext}$), peuvent être stockées dans l'unité de commande de moteur (13), par lesquelles, après l'étalonnage, la visseuse électrique (2) est commandée en interne pendant l'utilisation fonctionnelle,
**en ce que** pour la préparation d'un processus d'étalonnage, des données de visseuse électrique sont entrées sur l'unité de programmation et d'affichage (10), un nombre de couples de serrage espacés dans la plage de travail et pouvant être prédéfinis manuellement étant en outre prédéterminé et entré sous la forme de couples nominaux d'entrée ($M_{soll,ext}$),
**en ce que** pendant les mesures d'étalonnage, les couples nominaux d'entrée ($M_{soll,ext}$) sont utilisés dans l'unité de commande de moteur (13) comme des valeurs nominales de commande pas encore corrigées ($M_{soll-korr}$),
**en ce qu'**après le début d'un processus d'étalonnage, les mesures d'étalonnage prédéfinies sont effectuées les unes après les autres, dans lequel, pour chaque couple nominal d'entrée ($M_{soll,ext}$), le dispositif de mesure de couple (6) mesure un couple associé comme couple de serrage réel (Mist,gemessen), et en ce qu'à partir de paires de valeurs ainsi établies, respectivement des points d'ancrage ($S_1$ à Ss) sont formés et stockés dans l'unité d'étalonnage (7),
**en ce qu'**après les mesures d'étalonnage, une courbe de mesure continue (17) passant par les points d'ancrage établis ($S_1$ à Ss) et interpolée pour des valeurs intermédiaires ou un diagramme caractéristique correspondant est formé(e) dans l'unité d'étalonnage (7) de sorte que même pour des valeurs intermédiaires il existe une association univoque entre un couple nominal d'entrée ($M_{soll,ext}$) et un couple de serrage réel (Mist,gemessen),
**en ce qu'**au moyen de l'unité d'étalonnage (7), la courbe de mesure (17) ou un diagramme caractéristique correspondant est transmis(e) à l'unité de commande de moteur (13) et y est stocké(e), et des valeurs nominales de commande corrigées ($M_{soll,korr}$) internes provenant de la courbe de mesure existent qui peuvent être utilisées en cours de fonctionnement pour la commande du moteur après l'étalonnage,
**en ce que** pour terminer le processus d'étalonnage, l'unité de commande de moteur est commutée de telle sorte que pour la suite de l'utilisation fonctionnelle de la visseuse électrique, les couples de serrage réels mesurés ($M_{ist,gemessen}$) provenant de la courbe de mesure ou d'un diagramme caractéristique sont utilisés comme de nouveaux couples nominaux d'entrée ($M_{soll,ext}$) pouvant être entrés, et les couples nominaux d'entrée ($M_{soll,ext}$) d'origine, utilisés avant et pour l'étalonnage, sont utilisés comme des valeurs nominales de commande corrigées ($M_{soll,korr}$) associées.

**2.** Procédé d'étalonnage selon la revendication 1, **caractérisé en ce que** l'allure de la courbe de mesure est simulée et interpolée entre les points d'ancrage (S) par un polynôme du Nième ordre, de préférence comme un polynôme du troisième ordre par :

$$M_{ist,gem} = a_3\,M^3_{soll,ext} + a_2 \cdot M^2_{soll,ext} + a_1 \cdot M_{soll,ext},$$

et les coefficients établis $a_1$ à $a_n$ sont transmis et mémorisés sous forme de paramètres pour l'allure de courbe de mesure.

3.  Procédé d'étalonnage selon la revendication 1 ou 2, **caractérisé en ce que** sept points d'ancrage (S) sont établis lors d'un étalonnage.

4.  Procédé d'étalonnage selon l'une quelconque des revendications 1 à 3, **caractérisé en ce que** la puissance moteur du moteur d'entraînement (14), de préférence d'un moteur électrique, peut être commandée sans tolérance par l'unité de commande de moteur (13), et les couples nominaux d'entrée ($M_{soll,ext}$) pour le processus d'étalonnage sont prédéfinis avec un rendement théorique supposé du réducteur à engrenages (15) de 100 % de sorte que lors du processus d'étalonnage, respectivement des couples de serrage réels inférieurs ($M_{ist,gemessen}$) sont établis, la différence établie étant déterminée par le rendement d'engrenage réel, soumis à des tolérances, de moins de 100 %.

5.  Procédé d'étalonnage selon la revendication 4, **caractérisé**
    **en ce que** pour des visseuses électriques (2) de différentes séries ayant différentes plages de travail, respectivement les mêmes moteurs d'entraînement (14), de préférence des moteurs électriques, et les mêmes unités de commande de moteur (13) mais des réducteurs à engrenages ayant différentes démultiplications sont utilisés,
    **en ce que** les étalonnages sont effectués respectivement avec le même dispositif de mesure de couple (6) et la même unité d'étalonnage (7), dans lequel, pour déterminer les couples nominaux d'entrée ($M_{soll,ext}$) pour le processus d'étalonnage, les différentes démultiplications respectives sont entrées au niveau de l'unité de programmation et d'affichage (10).

6.  Procédé d'étalonnage selon la revendication 4 ou 5, **caractérisé en ce que** pour l'utilisation de série de moteurs électriques identiques sans tolérance, de préférence de moteurs électriques sans balais, comme moteurs d'entraînement (14), l'étalonnage ne concerne respectivement qu'un réducteur à engrenages actuel (15) de sorte que des moteurs électriques (14) peuvent être remplacés comme des pièces d'usure sans nécessiter de nouvel étalonnage.

Fig. 1

bei Kalibrierung  Nm  nach Kalibrierung

($M_{soll,\,ext}$)      ($M_{soll,\,korr}$)

17

$S_5$

1000

900

$S_4$

800

700

$\overline{675}$

600        $S_3$

500

400        $S_2$

$\overline{350}$

300

200        $S_1$

100

175      350      500      750      975

bei Kalibrierung
($M_{ist,\,gem}$)

100   200   $\overline{300}$   400   500   $\overline{600}$   700   800   900   1000      Nm

nach Kalibrierung
($M_{soll,\,ext}$)

<u>Fig. 2</u>

EP 3 461 588 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4307131 C2
- EP 1543925 B1
- DE 9010464 U1
- DE 20319668 U1
- DE 19845871 A1
- DE 19907713 A1
- WO 2012019575 A1